# EUROPEAN PATENT SPECIFICATION

(11) **EP 1 888 324 B1**
(45) Date of publication and mention of the grant of the patent: **24.11.2010**
(21) Application number: 06772446.8
(22) Date of filing: 07.06.2006
(51) Int. Cl.: B29D 11/00, B29C 45/56

(54) **METHOD OF INJECTION MOLDING THIN LENSES AND PRODUCING LAMINATED PHOTOCHROMIC LENSES**
VERFAHREN ZUM SPRITZGIESSEN VON DÜNNEN LINSEN UND ZUR HERSTELLUNG VON BESCHICHTETEN PHOTOCHROMEN LINSEN
PROCEDE DE MOULAGE PAR INJECTION DE LENTILLES MINCES ET PRODUCTION DE LENTILLES PHOTOCHROMIQUES STRATIFIEES

(30) Priority: 08.06.2005 US 147614
(43) Date of publication of application: 20.02.2008
(73) Proprietor: ESSILOR INTERNATIONAL (COMPAGNIE GENERALE D'OPTIQUE), 94220 Charenton-le-Pont (FR)
(72) Inventor: MAYR, Roger, A., Seminole, FL 33778 (US); CHIU, Hao, Wen, Palm Harbor, FL 34685 (US); YANG, Hsinjin, E., Palm Harbor, FL 34685 (US)
(74) Representative: Lepelletier-Beaufond, François
(86) International application number: PCT/US2006/022152
(87) International publication number: WO 2006/133307

(56) References cited:
- WO-A-2004/020183
- GB-A- 1 577 522
- US-A- 4 867 553
- US-A- 5 415 817
- US-B1- 6 256 152
- US-B1- 6 270 698
- US-B1- 6 284 162

## Description

### BACKGROUND OF THE INVENTION

### 1. Field of the Invention

The present invention relates to a method for injection molding ultra thin thermoplastic lenses and producing laminated photochromic lenses therefrom.

### 2. Description of the related art

Lenses and other articles manufactured at optical quality, have exacting demands for mold replication, high optical transmission and impact resistance. In the 2002 Polycarbonates publication, Brunelle and Kailasam describe how polycarbonate is prepared by the transesterification of a bisphenol-A with a carbonate. U.S. Patent 5,212,280 describes diphenols which are useful in the condensation method of producing polycarbonate in the presence of phosgene.

Injection molding of lenses requires edge gating so that the runner ends up remote from the lens surfaces. The paths from the gate to the edge points of the mold cavity are not symmetrical and therefore make it difficult to control the thermodynamics of the cooling melt flow. As lens cavities become thinner, straight injection molding techniques are unable to fill the mold without premature freeze-off. Accordingly, injection molding machines have been modified to enlarge the cavity during some phase of the injection cycle, in a so-called injection/compression process. An example of injection/compression utilizing auxiliary component hardware follows.

U.S. Patent 5,972,252 uses auxiliary hydraulic cylinders to move the insert on the movable side of the mold. Toward the end of the injection cycle, the hydraulic cylinders advance the retracted insert toward the stationary side of the mold to compress the resin to its final thickness.

G.B. Patent 1,577,522 uses an auxiliary hydraulic cylinder to move one sliding insert relative to its mold half. Following the injection of the molten plastics into the cavity, the hydraulic cylinder advance the retracted sliding insert toward the fixed insert to compress the molten plastics to its desired thickness.

U.S. Patent 6,616,868 overfills an enlarged cavity and during a compression step, the excess resin is forced back into the injection cylinder. In an alternate embodiment, the pressure in the injection cylinder and the compression force are adjusted to deliver an amount of resin needed to achieve the target thickness.

U.S. Patent 6,284,162 uses an auxiliary hydraulic cylinder to move one of the inserts to create an enlarged cavity. After introduction of the resin, the hydraulic cylinder advances the insert to a hard stop point which corresponds to the final part thickness. The reference attempts to overcome a series of problems associated with clamp-end injection/compression molding. Among the problems noted is the inability to mold thin centered lenses under the high clamp pressure and the tendency for such systems to create flash and damage the equipment.

U.S. Patent 5,415,817 employs a sleeve which extends past the insert to close the parting line while the insert remain retracted. When the insert begins advancing to compress the resin, excess molding material flows into an overflow well formed in the sleeve.

WO 00/71331 describes one embodiment which does not utilize auxiliary hardware, but employs a first low clamp force during initial filling of the mold. The injection screw then switches over to velocity-pressure mode and the second higher clamp force is exerted after which a coining operation occurs. In a second embodiment, the first clamp force brings an auxiliary third plate of a three plate mold to a position corresponding to an enlarged cavity. The second clamp force than advances the third plate to compress the resin to its target thickness.

As can be seen from the above descriptions, auxiliary component injection/compression molding utilizes springs, cylinders or other mechanical means to exert a force on the insert and move it relative to its sleeve or its mold side. These systems typically exert a compressive force less than the clamp force, frequently in applications where it is believed that clamp force is excessive. However, they add cost and complexity to molding systems. Operators have to coordinate the clamp force in addition to the auxiliary component equipment and settings. Accordingly it would be desirable to injection mold high quality thin lenses with the simplicity of a clamp-end process. Such lenses could be utilized as carriers for coatings, as lenses, and as components in laminated optical assemblies, such as laminated photochromic lenses.

Previously, relatively thick lenses were utilized in laminated optics, as can be seen for example in U.S. Patent 6,256,152. The process as described in all of the examples, uses a pair of 2.5 mm center thickness Diallyl glycol carbonate lenses. Dially glycol carbonate is a thermoset polymer sold under the trade name CR-39, that is formed into lenses by casting. CR-39 is more brittle, and therefore less flexible, than polycarbonate. As a result the prior art requires perfectly matching base curves on the mating surfaces of the two lenses. An inner film or foil is cast, molded or blown into a solid form having the same base curve as the interfacial surfaces of the two lenses. Despite the uniform base curves, the prior art requires an additional step of treating the interfacial surfaces with plasma or corona discharge *inter alia*, in order to modify or improve bondability.

U.S. Patent 4,867,553 also relates to cast CR-39 lenses having a center thickness at least 1.0 mm and an edge thickness of approximately 1.7 mm. The patent describes a two component assembly. The cover lens can include coatings, filters or tints. However, within the specified ratio of 1.5 to 2 times more edge thickness than center thickness, a photochromic dye will appear much darker in the thicker, peripheral portions than it will in the center.

Accordingly, it would be desirable to provide a lens assembly having a uniformly thick photochromic layer, along with a streamlined process to laminate a thin and flexible front lens thereon, without having to supply both of the lenses and the photochromic film in the same base curve.

### SUMMARY OF THE INVENTION

It is an object of the present invention to provide a method for injection molding thin (less than 1 mm thickness) thermoplastic lenses.

It is yet another object of the present invention to mold such lenses without using high-speed injection molding machines.

It is a further object of the present invention to utilize a clamp-end coining process to provide strong, high-yield lenses.

It is another object of the present invention to provide a method for incorporating injection molded ultra thin (less than 1 mm thickness) thermoplastic lenses into an optical assembly.

It is a further object of the present invention to provide photochromic functionality to the laminated optical assembly.

It is another object to provide a flexible two stage compound application step for accommodating a variety of lens and coating conditions.

These and other objects according to the invention are obtained by a method for injection molding thin lenses with a coining operation, in which the mold halves are closed with a predetermined clamp force F_{c} that is less than the net integrated force exerted on the mold inserts during injection. Molding material is injected into the cavity with a force F_{I} greater than F_{c} to force the mold open thereby reducing the flow resistance and allowing the material to reach portions of the insert periphery. A lens having a section less than 1 mm thick is coined as the net integrated force on the inserts subsides.

The flow resistance is reduced by venting the cavity through the open parting line of the mold or reducing the flow resistance, or a combination of both. During the injecting step, the molding material is in intimate contact with the inserts at a thickness greater than the final coined lens thickness. The coining step reduces the thickness of the lens to between 0.5 and 0.6 mm thick as the mold closes. Following the injecting step, the method further includes the step of shifting the injector to packing pressure mode so that molding material stops flowing into the cavity. For clamp-end coining, the inserts are secured in a fixed position within their respective sleeves, so that force exerted on the inserts by the molding material is transferred to the mold clamp.

The injecting step includes injecting molding material at a speed of at least about 3 ips and at an injection pressure of at least about 69 MPa (10,000 psi.) The coined lens is utilized in a coating transfer process to apply a coating to another lens. The molding material is a thermoplastic having a viscosity of less than 400 Pa for shear rates below 1,000 / s at 300 degrees C.

The invention also includes lenses obtained by the above-described methods, wherein the lens is made of a thermoplastic having a viscosity less than 400 Pa for shear rates below 1,000 / s at 300 degrees C and wherein the lens has a thickness between 0.5 mm and 0.6 mm. The lens may be utilized in a front side (FST) or back side (BST) transfer process, i.e. as a plano carrier having a thickness of between 0.5 and 0.6 mm across its entire surface.

Alternatively, the method according to the invention may produce lenses having a negative power with a center thickness less than 1mm, for example between 0.7 mm and 0.8 mm. Lenses may be produced having a positive power with an edge thickness less than 1 mm.

Other objects according to the invention are attained by a method for producing laminated photochromic lenses that incorporate a thin front lens having a thickness less than 0.8 mm. A liquid photochromic solution is solidified *in situ* onto a single vision (SV) support lens without pressure to form a photochromic layer directly on a SV support lens surface in the absence of an intermediate adhesive layer. Next, at least two compounds are applied between the photochromic layer and the ultra thin front lens. The compounds may include a protective layer, a primer layer, an acrylic-based layer, a polyurethane latex layer, an adhesive layer, and combinations thereof. The ultra thin front lens is then laminated onto the photochromic layer with compressive pressure, whereby the shape of the ultra thin front lens can be deflected up to 0.5 base curves to completely conform to the shape of the SV support lens surface.

The ultra thin lens is made from polycarbonate having a viscosity of less than 400 Pa for shear rates below 1,000 / s. The injection molding step includes coining an ultra thin lens having a thickness between 0.8 mm and 0.3 mm. The ultra thin front lens is a straight top bifocal lens having an add power between +1.00 and +3.00 diopters. For example, the distance portion is between about 0.7 mm and about 0.5 mm thick.

The step of applying at least two compounds includes first coating a polyurethane latex primer onto the photochromic layer of the support lens. The primer layer is spin-coated onto the convex surface at room temperature then dried at a temperature between 50 degrees and 100 degrees C. There is a second applying step of an optical adhesive between the primer and the ultra thin front lens. A UV curable optical adhesive may be used. For example, a UV curable optical acrylate adhesive that is dispensed from a syringe at room temperature. Alternatively, a pressure sensitive adhesive film may be employed.

In another embodiment, there is a first application of a protective coating onto the photochromic layer of the support lens. Then apply an optical adhesive between the protective coating and the ultra thin front lens. A UV curable optical adhesive may be used. For example, a UV curable optical acrylate adhesive that is dispensed from a syringe at room temperature. Alternatively, a pressure sensitive adhesive film may be employed.

The laminating step occurs at room temperature with a pressure between 34.5 kPa and 414 kPa (5 psi and 60 psi.) For example, inflating a silicon rubber bladder to apply pressure onto the ultra thin front lens between about 69 kPa and 172 kPa (10 psi and about 25 psi.)

The ultra thin lens is a bifocal or multi-focal lens. For example, a straight top bifocal lens having an add power of between + 1.00 and + 3.00 diopters. The front surface may include a hard coat or an antireflective coating or both.

The SV support lens has a back surface that is adapted to be ground so that the SV support lens prescription can be customized, thereby providing a straight top bi-focal lens with photochromic properties contributed by a uniformly thick, internally laminated photochromically active layer. The invention also includes the laminated optical assembly made according to the methods described herein.

### BRIEF DESCRIPTION OF THE DRAWINGS

The advantages, nature, and various additional features of the invention will appear more fully upon consideration of the illustrative embodiments now to be described in detail in connection with accompanying drawings. In the drawings wherein like reference numerals denote similar components throughout the views:
FIG. 1 is a flowchart showing various steps according to an embodiment of the method of injection molding according to the invention.
FIG. 2 is a flowchart illustrating a lamination process according to the prior art.
FIG. 3A is a flowchart illustrating a streamlined lamination process according to an embodiment of the invention.
FIG. 3B is a flowchart detailing the available coating options according to the streamlined lamination process according to the invention.
FIG. 4 is a diagram designating the various surfaces and coatings in the laminated assembly.

### DETAILED DESCRIPTION OF PREFERRED EMBODIMENTS

The present invention provides methods for producing thin lenses made from a thermoplastic material. The invention overcomes difficulties typically associated with injection molding lenses less than 1mm thick, for example lenses of about 70mm in diameter. Applications for such lenses include their use as carriers in the backside transfer (BST) process or the front side transfer (FST) process, described in greater detail below. Carriers for the BST or FST processes may be manufactured as surfaced carriers, thermoformed carriers or injection molded carriers. Further applications include the production of powered lenses having center or edge sections up to about 1mm thick.

As used herein, the term lens means an optical grade article. The term includes plano lenses as well as powered lenses. Thermoplastic means an optically clear thermoplastic of optical grade. Thermoplastics that may be used include, by way of example only, polycarbonates, polycarbonate/copolyester blends, acrylics like PMMA, cyclic olefin copolymers, amorphous polyamides, polyesters, copolyesters, polyurethanes, and the like.

The BST process transfers a coating to the backside of a lens through the use of a carrier. The technical details of the process are described in U.S. Patent 6,562,466 by Jiang et al. In the present application, it is understood that all details related to the back side of a lens may be also applied to the front side of the said lens. For example, see WO 03/004255 which describes such coating transfer processes.

The coating carrier is a thin thermoplastic plano lens. For example, the carrier lens may be made from polycarbonate. The geometric characteristics of a carrier, such as thickness and base curve uniformity, play a critical role in the success of BST/FST because the laminating process relies on the deformation of the carrier to match the back surface of a lens for seamless transferring of the coating. In addition, the surface condition of a carrier predetermines the coating quality of the resulting lens since the carrier is the initial bearer of the reversed HMC (Hard Multi Coating) stack. HMC is a hard coat or anti-reflective layer or both which are applied to lenses.

A carrier lens with a center thickness about 0.5 mm achieves an excellent balance between flexibility for laminating and rigidity for coating. Carriers can be made by surfacing a lens blank, thermoforming polycarbonate sheets or by injection molding. Severe challenges arise in attempting to injection mold a meniscus-shaped article, at optical quality, via edge-gated injection molding. A gate height on the order of 0.5 mm affects the conditions under which material can be delivered across a 70mm lens diameter, and the resulting 3,000 plus square millimeter surface area. The narrow flow passage in the cavity itself, along with the high viscosity of the polycarbonate melt dramatically increases the flow resistance. In addition, as the molten resin is spread thin through contact with the insert surfaces, its surface area rises in proportion to its volume resulting in excessive heat loss. As a result the melt front tends to freeze off prematurely resulting in short-shots.

The flow resistance of a resin is directly related to its melt viscosity. Below are some Viscosity values (in Pa) for the shear rates (in 1/s) at the top of each column for various PC (Polycarbonate) resins.

**Table 1 - Viscosity Values (in Pa) for Various Shear Rates**

| Shear Rate (1/s) | 0.1 | 1 | 10 | 100 | 1000 | 1X10⁴ |
|---|---|---|---|---|---|---|
| GE Lexan OQ3820 | 3600 | 3400 | 3000 | 2200 | 750 | 150 |
| GE Lexan HF1110 (high flow) | 350 | 340 | 330 | 300 | 220 | 80 |
| Bayer Makrolon 2407 | 550 | 540 | 500 | 450 | 300 | 80 |
| Bayer Makrolon CD2005 | 180 | 180 | 180 | 170 | 140 | 45 |

The values in Table 1 suggest that increasing the shear rate by raising the injection speed can decrease the melt flow resistance. In addition, sufficiently high injection speed can overcome the unfavorable thermodynamic heat loss in which the melt front freezes off before filling the cavity. In general, the methods according to the invention contemplate the use of optically clear thermoplastics having a viscosity below 400 Pa at a shear rate of 1,000/s measured at 300 degrees C.

### Simulation 1

The GE HF1 110 (high flow) resin was modeled in a MoldFlow filling simulation of a single 71mm lens of 0.5mm thickness with a gate entrance area of 9.8 mm². At an injection pressure of 166 MPa (24,000 psi), the model simulated four filling times of 1, 0.5, 0.25 and 0.1 seconds. This corresponds to volumetric flow rates of 2028, 4056, 8112, and 20,280 mm³/s. The mold was filled using the shortest fill time of 0.1 seconds. The other filling times resulted in short shots.

### Simulation 2

The importance of melt flow index was researched using GE OQ3820 resin having a melt flow index (MFI) of 7; GE HF1110 with a MFI of 25; and Bayer CD2005 with a MFI of 63. Under the same processing conditions as above, at a 0.25 second filling time, the cavity was easily filled with the CD2005 while the other resins resulted in short shots.

### Example 1

A Cincinnati RoboShot was configured to operate at maximum injection speed 14.7cm (5.9 inches) per second (ips), maximum injection pressure of 166 MPa (24,000 psi) and maximum clamp tonnage of 110 U.S. tons. The machine was equipped with a 2-cavity, 71mm diameter mold from APEX. One cavity was blocked, and the other held a 6-base stock plano steel insert set. Thin carriers were molded with Bayer DP1-1265 and Bayer 2407 under the following process parameters:

| | |
|---|---|
| Mold Temperature: | 138°C (280 degrees F) |
| Melt Temperature: | 313°C (595 degrees F) |
| Injection Speed: | 5.9 ips - one step |
| Packing: | 83MPa (12,000 psi)- 2 sec, 69MPa (10,000 psi) 3 sec; 5,000 - 5 sec |

The Bayer DP1-1265 resin produced the thinnest lenses having a center thickness slightly above 0.6 mm. Lenses with a 0.65 mm center thickness were common, thereby failing to achieve the objective of molding lenses about 0.5 mm. Since the carriers were thicker than desired, it followed that the BST yield ranged from 44% to 78%. Other problems included non-uniform thickness, base curve variation, and breakage. Part of the problem was tracked during a volumetric flow simulation which indicated very high pressure near the gate resulting in negative shrinkage (expansion) during cooling. An investigation of carrier breakage revealed two main causes: the use of a low molecular weight resin; and flow orientation.

Low molecular weight resin. The low molecular weight DPI was chosen for its favorable flow characteristics, although it is inherently more brittle that other higher molecular weight resins such as Bayer 2407, GE HF1110 or GE LFV249. A long molding residence time may cause degradation to the polymer chains, resulting in a further detrimental reduction in molecular weight and contributing to breakage.

Flow Orientation. The foremost reason for breakage was believed to be a flow orientation effect, which reduces the strength of the carrier when a bending force is perpendicular to the direction of flow. This explains why carrier breakage during BST occurs most frequently along the gate-to-tab straight [diameter] line. To demonstrate the flow orientation, a MoldFlow simulation utilizing glass fiber filled PC resin was conducted. The simulation illustrated parallel fiber orientation in the skin layer extending from the gate to the tab in a straight line. While fibers in the core are oriented in a perpendicular direction. Again the large surface area to volume ratio becomes a problem in molding thin carriers. It was theorized that the strength of the part becomes directional dependent, wherein the part is weaker along the flow and stronger across the flow. The contribution of orientation to breakage was confirmed through DMA (Dynamic mechanical analyzer) fatigue testing.

Dynamic Mechanical Analyzer Test. In the test, the storage modulus of a sample was recorded over time under cyclic bending. Several PC bars were cut from a commercial CD disc and lenses molded with GE ophthalmic grade, Bayer high flow 2407 and CD/DVD DP1-1265 resins. For each material, two testing bars were sampled, one with the long edge parallel to the flow and the other with the long edge perpendicular to the flow. All samples had a thickness of 1.2 mm, and were bent along the long edge.

**Table 2 - Seconds to Onset of Failure in DMA**

| Sample | cut parallel to flow | cut perpendicular to flow |
|---|---|---|
| GE | did not break | 192 secs. |
| Bayer 2407 | did not break | 127 secs. |
| Bayer CD | 93.2 secs. | 3 secs. |
| comm. CD disc | 46 secs. | 28 secs. |

With the GE and Bayer 2407 samples, no breakage occurred for samples cut parallel to flow during the duration of the 1,000 second test. The samples cut perpendicular did break at the times indicated. The Bayer CD parallel sample failed much earlier than the Bayer 2407. The perpendicular sample broke almost immediately. The CD commercial grade parallel sample behaved similarly to the Bayer CD. However, the perpendicular sample took longer to fail than the Bayer CD. It was concluded that the molding process to produce the samples introduced more of a detrimental orientation effect than commercial CD molding, but probably about the same degree of molecular degradation.

Since Bayer 2407 is less brittle than CD commercial grade, blending of Bayer 2407 and CD grade resins was used to address the carrier breakage issue. Since the blend was a higher viscosity than the CD commercial grade alone, the thinnest part had a center thickness of about 0.65 mm. Test results of these carriers showed no breakage during BST. However, the optical yields were undesirable because the carriers were too thick. In order to reduce thickness to the target 0.5 mm level, it was determined that a machine with an injection speed higher than the RoboShot's 5.9 ips was needed.

### Example 2

A further test was conducted with an Engel conventional high speed machine operating at the maximum 200 ton hydraulic clamp force and the maximum injection speed of 40 ips. The 2-cavity, 76mm diameter mold was used. Both GE OQ1030 (CD grade) and GE HF1110 (high flow) resins were used. The OQ1030 achieved an actual injection speed of 25 ips and carriers having a center thickness of 0.5mm were obtained. For the HF1110, carriers with center thicknesses slightly under 0.6 were obtained. BST laminating tests of the resulting carriers in applying PHC (protected hard coat) resulted in a 90% yield.

The parts from the Engel machine were characterized by the presence of excess flash. During injection, it was observed that the parting line was forced open allowing the resin to flow out of the boundary of the mold inserts. At the same time, however, resin was easily able to flow across the inserts as the passage was wider and pressure from within the cavity was released. Accordingly, one aspect of the invention may be to inject a greater volume of molding material than is required to form the lenses themselves. For example, 1.5x to 3x the volume of molding material may be injected to facilitate the opening of the mold. Toward the end of the injection phase, as the flow of material into the cavity decreased, the mold began closing down from its fully open position. This coining action that occurred on the portion of the resin still contained within the periphery of the inserts minimized flow orientation, producing a higher strength carrier.

### Example 3

A Nissei FN4000 having a 200 ton hydraulic clamp was configured to operate at 75% of maximum clamp force to obtain a better balance with the maximum injection speed of 132 mm/sec [5.2 ips]. Bayer DP1-1265 and GE OQ1030 were utilized in the example with a melt temperature of 313°C (595 degrees F) and a mold temperature of 129°C (265 degrees F.) The process was utilized to mold a pair of 76mm 6-base plano steel insert in a 60 second cycle. Due to excess flash, secondary processing including degating and die-cutting was needed to obtain the final carriers. However, the quality of the resulting carriers is almost on par with regular plano lenses, and is superior to those obtained from surfacing. Lens having a center thickness of about 0.56mm were produced consistently. In a subsequent test of the carriers with full HMC stack, resulted in an 86% acceptable yield. The carriers resulting from this example are compared to surfaced carriers and thermoformed carriers in the following Table 3.

**Table 3**

| | | | Group A | | Group B | | Group C | |
|---|---|---|---|---|---|---|---|---|
| | | | Surfaced Carriers | | Thermoformed Carriers | | Injection-Molded Carriers | |
| Parameter | Units | Method | Mean | Std. Dev. | Mean | Std. Dev. | Mean | Std. Dev. |
| Sphere | Diopters | Humphrey | 0.08 | 0.04 | -0.01 | 0.03 | 0.09 | 0.01 |
| Cylinder | Diopters | Humphrey | -0.04 | 0.03 | -0.01 | 0.03 | -0.02 | 0.01 |
| Prism | Diopters | Visionix (ref.) | 0.32 | 0.06 | 0.11 | 0.01 | 0.09 | 0.05 |
| Center thickness | mm | Gage | 0.53 | 0.03 | 0.47 | 0 | 0.56 | 0.0004 |
| Max. Thickness Difference | mm | Gage (prism base to apex) | 0.1 | 0.04 | 0.01 | 0 | 0.08 | 0.03 |
| Radius 1 convex | mm | Radiuscope | 85.27 | 0.81 | 87.26 | 2.55 | 82.6 | 0.34 |
| Radius 2 convex | mm | Radiuscope | 1.37 | 0.65 | 4.37 | 2.07 | 2.95 | 1.65 |

While the high speed Engel machine produced a very high yield, it was discovered that appropriately controlling injection pressure and clamp force, even on a standard machine, can produce adequate yields. Injection pressure affects the mold opening force as a function of the pressure impinging on the inserts. Mathematically, the cavity pressure is integrated across the insert surface to obtain the mold opening force. Now it becomes a matter of balancing the mold opening force with the clamp force. The term "net integrated force" refers to the resulting effective force urging the opposing inserts away from each other against the biasing force of the mold clamp.

In Example 1, by blocking off one cavity, the surface area was reduced by half, thereby proportionally diminishing the mold opening force. Examples 2 and 3 demonstrate that molding at 40 ips, with an effective speed of 25 ips, can produce generally similar results to molding on a 5.2 ips machine. By lowering the clamp tonnage and allowing the mold to breathe, many of the technical difficulties associated with filling a thin cavity are overcome.

Based on these tests, slightly thicker lenses, having a center thickness between about 0.7 mm and 0.8 mm, have been molded with powers from -2 to +2. The principles derived from these tests lead to the conclusion that the methods according to the invention can be employed to make a full range of powered lenses. For example, minus lenses can be injection molded up to -8 having a center thickness about 1mm or less. Furthermore, plus lenses up to +8 can be injection molded having an edge thickness of about 1mm or less.

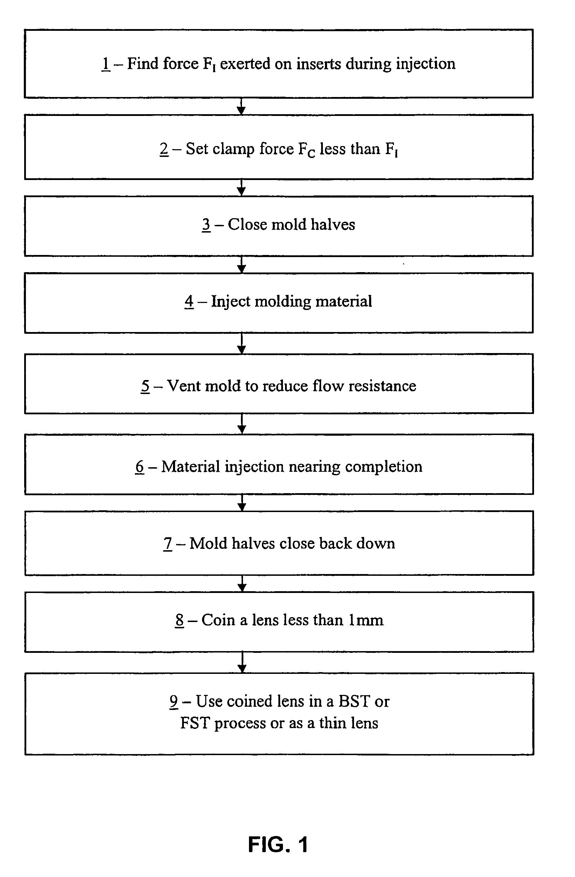

The basic steps for performing the method according to the invention, shall be more clearly explained with reference to the flowchart of FIG. 1. In step 1, the operator obtains a working value representing the force F₁ that will be exerted on the inserts during injection as a mold opening force. This value may be obtained by calculations, simulations or by previous molding trials. In step 2, the operator selects a clamp force F_{c}, which is less than F₁, and sets the value on the machine. The temperature settings are adjusted with due consideration for the particular molding material used. In practical tests, polycarbonate of varying flow characteristics were successfully used. Typically the melt temperature will be around 310°C (590 degrees F) to around 316°C (600 degrees F.) The mold temperature will be around 121°C to 143°C (250) degrees F to 290 degrees F.)

Now the molding cycle begins by closing the mold halves in step 3. Next, inject molding material in step 4. Because of the calculations in step 1 and the setting in step 2, the injection pressure exerted on the inserts will eventually exceed the clamp force. In the case of a straight injection molding machine, the insert is securely fixed within the sleeve which in turn in securely fixed to the respective side of the mold. This feature gives the operator flexibility in setting the distance between inserts equal to, or less than, the final part thickness. Accordingly, the movement of the inserts away from each other directly causes opening or venting of the parting line in step 5. This reduces the flow resistance by enlarging the cavity and reducing the pressure contained within the closed cavity. A range of injection speeds from at least about 3 ips to 5.2 ips on the low end to at least about 25 ips to 40 ips on the higher end have been used in practical runs following certain embodiments of the invention. The maximum injection pressure of 166 MPa (24,000 psi) or more has been successfully tried also. While these are exemplary, other values may prove useful as long as the net integrated force F_{I} of the melt flow is allowed to exceed the clamp force. For example, an injection pressure of at least 69MPa (10,000 psi.)

The material being injected into the cavity may be measured by volume or other parameter and step 6 signifies nearing completion of the injection phase. To insure mold filling under all speed/pressure conditions, the volume of molding material that is injected may be increased up to 1.5x to 3x the volume of the molded parts. As the flow of material into the now open cavity begins to slow, the pressure diminishes. Once the clamp force exceeds the pressure exerted by the molding material, the mold halves return from their open state in step 7. Step 7 may occur while material is still flowing into the cavity, for example, at a slower rate than initially. Step 7 may occur after the preset volume has been injected. In practical embodiments, the machine is shifted into packing pressure mode around step 6. This mode maintains pressure on the material screw to hold pressure in the cavity at a certain level, without introducing substantial amounts of additional material. The mold halves may return to their original position, or they may coin the lens to a thickness of less than 1mm in step 8 without completely closing. The degree of mold closing may be controlled by, or operate as a function of, the volume add-on mentioned above to arrive at the target thickness. The thin lenses manufactured according to the invention may be adhered to additional lenses to form composite lenses. The lenses are however, well suited for use in a BST or FST process or as a thin powered lens, as indicated in step 9.

One specific use for the thin powered lenses or ultra thin lenses, is in producing laminated optical assemblies. Laminated optical assemblies have certain advantages over one piece lenses. They allow different lens elements to be combined in a way that offers a large variety of lens powers and functions. For example, thin front lenses can provide bifocal or multi-focal optics. The support lens can provide basic single vision optics. During the assembly operation, functional filters, like photochromic filters can be sandwiched between the two lenses. This offers a distinct advantage since it is difficult to incorporate photochromic dyes into the lens material. Even if photochromic dyes were compounded into the resin, it would provide different degrees of darkening as a function of lens thickness. As will be described in greater detail below, the present invention provides a more streamlined process for the selection and assembly of laminated lenses, due in large part to the material processing that imparts photochromic functionality as well as the properties of the thin front lenses.

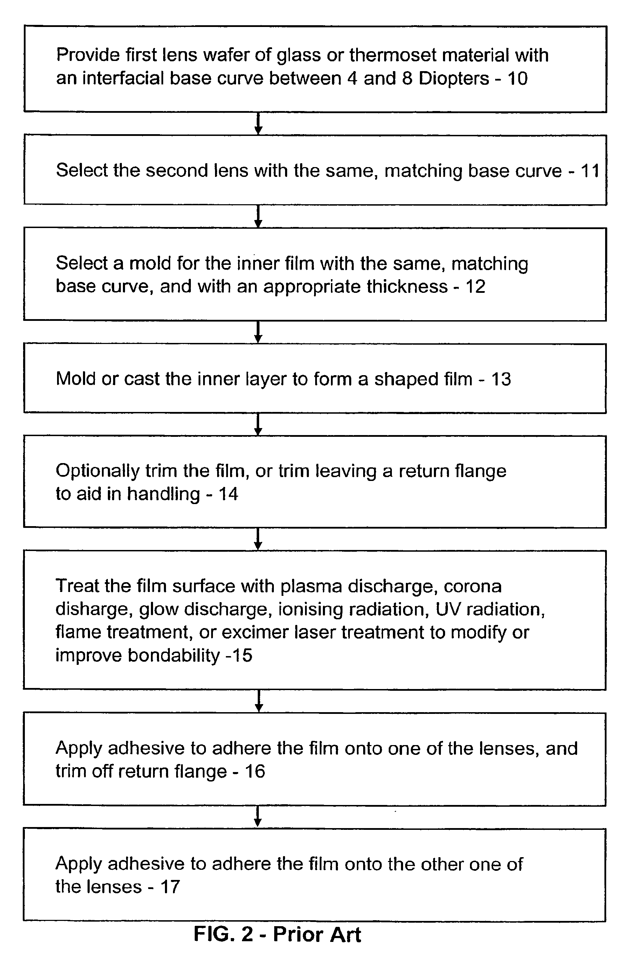

Referring now to FIG. 2, there is shown a series of steps to fabricate laminate lenses according to the prior art. In step 10, the front lens may be made of glass, although cast lenses made from CR-39 seems to be the preferred material. Once this lens is selected, the interfacial base curve is set, and the other components of the assembly must be exactly matching. In step 11 a second cast lens is selected. To impart a photochromic or polarizing film to the assembly, a film mold is needed with the matching base curve and an appropriate film thickness, per step 12. The inner layer is then mold or cast into a shaped film in step 13. The film may be trimmed in various ways in step 14.

When adhering the shaped film to the two lenses, there is an apparent problem with subsequent delamination. As a result the prior art introduces a burdensome step of treating the surfaces to be adhered. Step 15 indicates the surface treatment step as being one of plasma discharge, corona discharge, radiation treatment, laser treatment, etc. In step 16 there is the first application of adhesive to bond the shaped film to one of the lenses. If a flange is present on the film, it may be trimmed in this step, or in a later step. In step 17 there is the second application of adhesive and to bond the second lens to the first lens/film assembly.

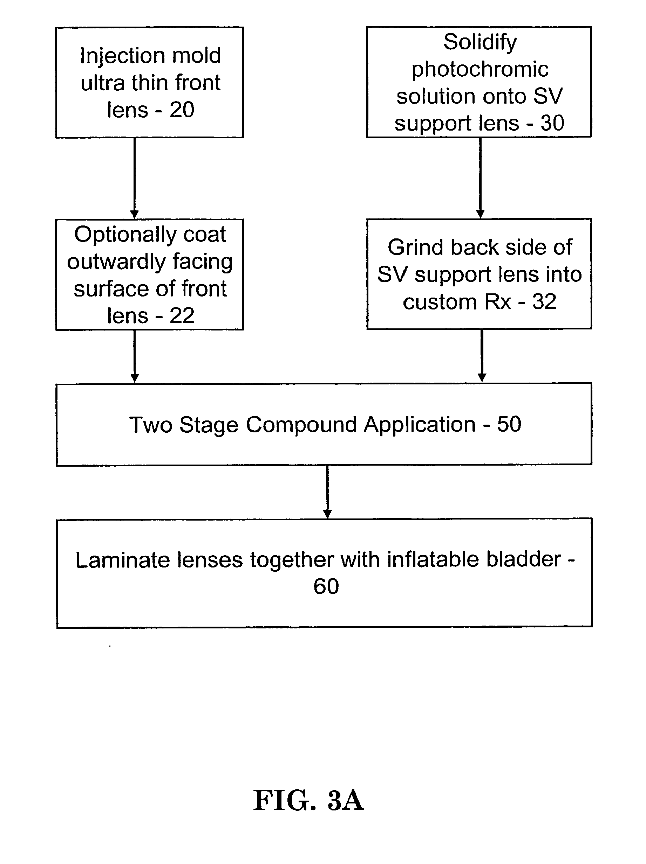

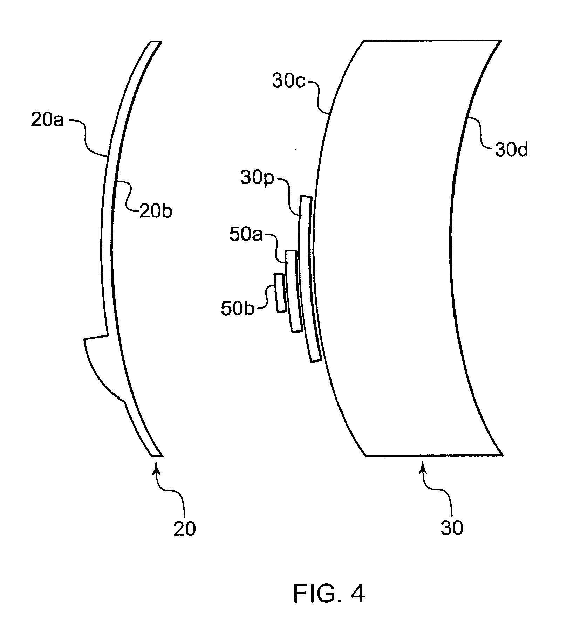

Referring now to FIG. 3A there is shown several steps pursuant to a streamlined method according to the invention. For consistency and clarity, we refer to FIG. 4 for lens side labels. Reading from left to right, front lens 20 has an outward side 20a, and an opposed inward side 20b. Support lens 30 has an interior side 30c and an exterior side 30d. The ultra thin front lens less than 1.0 mm thick is injection molded in step 20. Step 22 indicates an optional coating on the outward surface 20a of the front lens. The photochromic solution is delivered in liquid form directly on to the interior side 30c of the support lens, which may be a single vision (SV) lens. Once solidified the photochromically enabled surface is referred to as 30p. Step 32 indicates a grinding process on the exterior side 30d of the support lens to impart a custom prescription thereto.

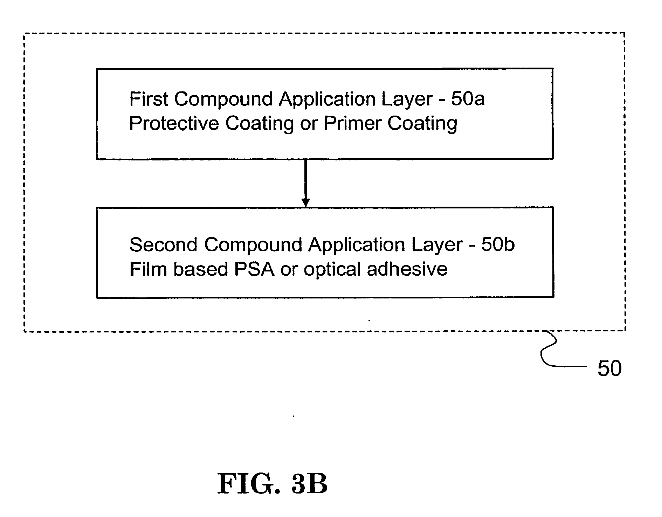

Step 50 includes the application of two compounds, one after the other, as can be seen in FIG. 3B. The first compound is applied to surface 30p, and is referred to as 50a. The second compound is applied to either surface 20b or 50a. Generally, the second compound 50b is an adhesive. The lenses are laminated together in step 60 with the three layers sandwiched therebetween to form the completed optical assembly.

Certain aspects of the lamination method will now be described in greater detail.

### Summary of method for injection molding ultra thin lenses

For the lamination method, we provide injection molded PC coined lenses having a plano distance portion with a thickness between 0.8 mm to 0.3 mm. For example, ultra thin lenses 20 would have a distance portion with a thickness of between about 0.7 mm to about 0.3 mm. These lenses may be configured as any type of bifocal or multi-focal lens, for example, curved top, round seg, no-line or executive bifocals. The lamination method is well suited for use with straight top or flat top bifocal having an add power of about +1.00 to about +3.00 diopters.

Plastic lenses, and in particular polycarbonate (PC), may be subject to scratching. Typically the outward surface 20a of such PC lenses are provided with a hard coat solution. Such lenses may also include an antireflective (AR) coating, or both AR and hard coat. These coatings may be applied to front lens 20 at any time that does not interfere with the lamination process. In addition, when a straight top bifocal is utilized, the coating(s) must be applied in a manner that avoids pooling or other unacceptable conditions at the straight top ledge.

### SV support lens

Semi Finished (SF) lenses are commonly produced with one optically finished side. This is represented by interior side 30c. SF lenses are manufactured in the first instance to be thicker than the final lens. The invention may use thermoplastic lenses, for example, polycarbonate. The exterior side 30d is ground at the lab into a predetermined shape that provides a varying thickness at points emanating radially from the lens center out to the lens periphery. When ground into this predetermined shape, the resulting lens is a Single Vision (SV) lens. The method according to the invention preserves this customization of SF lenses. This is referred to as the custom Rx for a particular customer. Within the context of the inventive method, the grinding process can occur at any time that does not interfere with the lamination.

The optically finished interior side 30c is coated with a photochromic solution that dries and solidifies to form a photochromic coating 30p. The application of the solution in a liquid form allows photochromic coating 30p to be applied without pressure and without an intermediate adhesive. As will be appreciated by those skilled in the art, this liquid application replaces several steps that are part of the prior art process. Those are the steps of: molding the photochromic layer into a shaped film; any trimming of the film; plasma/corona discharge treatment prior to adhering film; dispensing adhesive; and adhering the film onto one of the lenses.

### Flexible two-stage compound application

Some SV lenses with photochromic layers 30p are designed to receive a protective coating. Accordingly, we consider the application of such protective coating as the first compound 50a to be applied in our applying step.

The protective layer 50a is suitable for adhering directly to the inward surface 20b of the ultra thin front lens 20. The adhesive layer 50b can be applied on top of first compound 50a or on inward surface 20b. For example, apply at least one drop of an optical adhesive on either 50a or 20b. The optical adhesive may be applied at room temperature with a syringe. Suitable adhesives are a UV curable adhesive, an acrylate based adhesive, and a UV curable acrylate based adhesive.

Alternatively, a film based adhesive can serve as second compound 50b. For example, a film based pressure sensitive adhesive (PSA) may be employed. One commercially available product is PSA tapes from Nitto Denko Europe.

Using a pressure-sensitive adhesive (PSA) is particularly advantageous since the layered structure (thin lens) is permanently retained on the lens (SFSV) in a simple and inexpensive manner, without impairing the optical properties of both the lens and the structure. In particular, no irradiation, such as ultraviolet irradiation, nor intensive heating is required for obtaining a permanent bonding with a pressure-sensitive adhesive. All pressure-sensitive adhesives exhibit permanent tack and have a low elastic modulus at room temperature, typically between 10³ and 10⁷ Pa (pascals). It is pointed out that the adhesion mechanism involved with pressure sensitive adhesives does not involve chemical bonding, but it is based on special viscoelastic properties of pressure-sensitive adhesives. These properties intrinsic to each pressure-sensitive adhesive formulation make it possible to create electrostatic van der Waals interactions at the bonding interface. This occurs when a pressure-sensitive adhesive is brought into contact with a solid material with pressure. The pressure and the low modulus of the pressure-sensitive adhesive create intimate contact of this latter at a molecular scale with the topology of the solid material. Moreover, bulk viscoelastic properties of the pressure-sensitive adhesive lead to dissipation, within the thickness of the adhesive layer, of the energy resulting from mechanical stressing of the bonding interface. Therefore the interface can withstand pull-strengths and debonding mechanisms.

In addition, pressure-sensitive adhesives can be deposited in the form of a thin layer with uniform thickness. Such thickness may be comprised between 0.5 and 300 µm. Then, image formation through the lens is not impaired by the layer of pressure-sensitive adhesive and the optical power of the lens is not altered.

Several pressure-sensitive adhesives may be used in a process according to the invention. Advantageously, the pressure-sensitive adhesive is selected from a compound based on a polyacrylate, a styrene-based block copolymer and a blend incorporating a natural rubber. Non-limiting examples of pressure-sensitive adhesives have general compositions based on polyacrylates, in particular polymethacrylates, or based on ethylene copolymers, such as ethylene vinyl acetate, ethylene ethyl acrylate and ethylene ethyl methacrylate copolymers, or on synthetic rubber and elastomers, including silicones, polyurethanes, styrene-butadienes, polybutadienes, polyisoprenes, polypropylenes, polyisobutylenes, or based on polymers containing nitriles or acrylonitriles, or on polychloroprene, or on block copolymers that include polystyrene, polyethylene, polypropylene, polyisoprene, polybutadiene, on polyvinylpyrrolidone or vinylpyrrolidone copolymers, or are blends (with continuous or discontinuous phases) of the above polymers, and also may comprise block copolymers obtained from the above-listed compounds. These pressure-sensitive adhesives may also include one or more additives selected from tackifiers, plasticizers, binders, antioxidants, stabilizers, pigments, dyes, dispersing agents and diffusing agents.

Some SV lenses simply have a photochromic layer 30p. The laboratory would have the option of applying a protective layer or a primer layer. In the case of the latter, we consider the primer layer as the first compound layer 50a. For example, a polyurethane latex primer may be used. The primer can be spin-coated on to photochromic layer 30p, at room temperature, and then dried at a temperature between 50 and 100 degrees C.

The second compound layer 50b would then be an adhesive. The adhesive layer 50b can be applied on top of first compound 50a or on inward surface 20b. For example, apply at least one drop of an optical adhesive on either 50a or 20b. The optical adhesive may be applied at room temperature with a syringe. Suitable adhesives are a UV curable adhesive, an acrylate based adhesive, and a UV curable acrylate based adhesive.

Alternatively, a film based adhesive can serve as second compound 50b. For example, a film based pressure sensitive adhesive (PSA) may be employed. One commercially available product is the PSA tapes from Nitto Denko Europe.

Example 1 - A 0.58 mm thick 6.50 base +2.00 add PC front lens was laminated to a 6.5 base semi-finished single vision (SFSV) Transitions^{®} photochromic polycarbonate lens using a UV curable adhesive. The resulting SFSV bifocal lens laminate exhibited a very uniform darkening when exposed to sunlight.

Example 2 - A 0.58 mm thick 6.50 base +2.00 add PC front lens was laminated to a 6.5 base SFSV Transitions^{®} photochromic polycarbonate lens using a PSA. The resulting SFSV bifocal lens laminate exhibited a uniform darkening when exposed to sunlight.

### Lamination

After the intermediate layer 50a and second compound layer 50b have been prepared, the ultra thin front lens is ready for lamination. With SV lens 30 properly supported, front lens 20 is placed down with inward surface 20b facing the compound layers 50. Compressive pressure is applied to the outward surface 20a at room temperature. Suitable pressure is between 34.5 kPa and 414 kPa (5 and 60 psi.) For example, an inflatable bladder may apply between about 69 kPa and 172 kPa (10 and about 25 psi.) The bladder may be made from silicon, which is durable and avoids scratching the outward surface 20a. This compressive pressure is sufficient to press front lens 20 flat onto the stack, even if the interfacial surfaces 20b and coated surface 30a are of different base curves. Once front lens 20 is set, the assembly may be exposed to UV radiation to cure the adhesive, in the event that a UV curable adhesive has been employed.

The method according to the invention has numerous advantages and benefits over the prior art. The photochromic layer is easily solidified *in situ* without requiring the use of an intermediate adhesive. The photochromic layer is uniformly thick and near the front of the optical assembly. When a hard coat or AR coating is present on outward surface 20a, the photochromic layer 30p resides within about 0.7 to about 0.8 mm from the hard coat or AR coating.

In addition to the uniform darkening and preservation of the optical integrity of the original SV, there are several advantages of the present invention over other known approaches. Unlike in-mold decoration (IMD) or film insert molding (FIM) which requires mass production, the present lamination method can be performed on an individual bases, as needed, in the laboratory.

The method effectively utilizes our proprietary ultra thin coined lens in an optical assembly to deliver a straight top bifocal lens with photochromic functionality. The ultra thin lens can be flexed 0.5 diopters in base curve to conform to the base curve of surface 30c. This is particularly significant when providing a laminated lens series that incorporates SV lenses having a range of base curves (on surface 30c). For example, consider a series that includes SV lenses with base curves from 6 to 8 diopters, in 0.25 diopter increments. That would result in 9 different SV lenses. One would only need a 6.5 base front lens and a 7.5 base front lens to create a lens assembly, where the 6.5 base front lens could be employed on the 6.00, the 6.25, the 6.50, the 6.75 and the 7.00 base SV lens. Accordingly, in a laminated lens series, one front lens, can accommodate a full 1.00 diopter range of support lenses.

Having described preferred embodiments for lens manufacturing, materials used therein and methods for processing same (which are intended to be illustrative and not limiting), it is noted that modifications and variations can be made by persons skilled in the art in light of the above teachings. It is therefore to be understood that changes may be made in the particular embodiments of the invention disclosed which are within the scope of the invention as outlined by the appended claims.

## Claims

1. A method for injection molding thin lenses with a coining operation, the method comprising the steps of:
closing the mold halves with a predetermined clamp force F_{c} that is less than the net integrated force exerted on the mold inserts during injection;
injecting molding material into the cavity to force the mold open thereby reducing the flow resistance and allowing the material to reach portions of the insert periphery; and
coining a lens having a section less than 1mm thick as the net integrated force on the inserts subsides.

2. The method of claim 1, wherein reducing the flow resistance comprises one of venting the cavity through the open parting line of the mold; increasing the cavity height from the gate to remote portions of the insert periphery; and combinations of venting and increasing.

3. The method of claim 2, wherein during the injecting step, the molding material is in intimate contact with the inserts at a thickness greater than the final coined lens thickness.

4. The method of claims 1 to 3, wherein said coining step includes reducing the thickness of the lens as the mold closes, to coin a lens between 0.5 and 0.6 mm thick.

5. The method of claim 1, wherein following said injecting step, the method further includes the step of shifting the injector to packing pressure mode so that molding material stops flowing into the cavity.

6. The method of claim 1, wherein the inserts are secured in a fixed position within their respective sleeves, so that force exerted on the inserts by the molding material is transferred to the mold clamp.

7. The method of claim 1, wherein said injecting step includes injecting molding material at a speed of at least about 3 ips at an injection pressure of at least about 69 MPa (10,000 psi.)

8. The method according to any one of the preceding claims, wherein the molding material is polycarbonate and has a viscosity of less than 400 Pa for shear rates below 1,000 / s.

9. A method according to any of the preceding claims, wherein the lens is one of a plano carrier for a coating transfer process and a bifocal lens for a laminated photochromic optical assembly.

10. A method for producing laminated photochromic lenses comprising:
injection molding according to any of the preceding claims an ultra thin front lens (20) having a thickness less than 0.8 mm ;
solidifying a liquid photochromic solution in situ onto a single vision (SV) support lens (30) without pressure to form a photochromic layer (30) directly on a SV support lens surface in the absence of an intermediate adhesive layer;
applying at least two compounds (50a,50b) between the photochromic layer and the ultra thin front lens, wherein the compound is selected from the group consisting of a protective layer, a primer layer, an acrylic-based layer, a polyurethane latex layer, an adhesive layer, and combinations thereof; and
laminating said ultra thin front lens onto said photochromic layer with compressive pressure, whereby the shape of the ultra thin front lens can be deflected up to 0.5 base curves to completely conform to the shape of the SV support lens surface.

11. The method of claim 10, wherein said injection molding step comprises coining an ultra thin lens having a thickness between 0.8 mm and 0.3 mm, and preferably between about 0.7 mm and about 0.5 mm.

12. The method of claims 10 or 11, wherein the ultra thin front lens comprises a straight top bifocal lens having an add power between ±1.00 and +3.00 diopters.

13. The method of claims 10 to 12, wherein said step of applying at least two compounds comprises
first coating a polyurethane latex primer onto the photochromic layer of the support lens; and
second applying an optical adhesive between the primer and the ultra thin front lens.

14. The method according to claims 10 to 13, wherein said step of applying at least two compounds comprises
first applying a protective coating onto the photochromic layer of the support lens;
and
second applying an optical adhesive between the protective coating and the ultra thin front lens.

15. The method of claims 13 to 14, wherein said second applying step comprises applying a pressure sensitive adhesive film.

16. The method according to any of the preceding claims, wherein said laminating step comprises inflating a silicon rubber bladder to apply pressure onto the ultra thin front lens.

17. The method of any of preceding claims, wherein the SV support lens has a back surface that is adapted to be ground so that the SV support lens prescription can be customized, thereby providing a straight top bi-focal lens with photochromic properties contributed by a uniformly thick laminated photochromically active layer.

## Patentansprüche

1. Verfahren zum Spritzgießen dünner Linsen mit einem Prägeprozess, wobei das Verfahren folgende Schritte umfasst:
Schließen der Formhälften mit einer vorgegebenen Schließkraft F_{C}, die kleiner ist als die Gesamtkraft, welche auf die Formeinsätze während des Einspritzens ausgeübt wird;
Einspritzen des Formmaterials in die Kavität, um die Form aufzudrücken und **dadurch** den Fließwiderstand zu verringern und dem Material so zu erlauben Abschnitte des Einsatzrandbereiches zu erreichen; und
Prägen einer Linse mit einer Sektion mit einer Dicke weniger als 1 mm, wenn die Gesamtkraft auf die Einsätze abklingt.

2. Verfahren gemäß Anspruch 1, bei dem die Reduzierung des Fließwiderstandes eines umfasst von Belüften der Kavität durch die geöffnete Trennlinie der Form; Vergrößern der Kavitäthöhe vom Anguss zu entlegenen Abschnitten des Einsatzrandbereiches; und Kombinationen von Belüften und Vergrößern.

3. Verfahren gemäß Anspruch 2, bei dem während des Schrittes des Einspritzens das Formmaterial im innigen Kontakt mit den Einsätzen bei einer Dicke ist, welche größer ist als die Dicke der fertig geprägten Linse.

4. Verfahren gemäß Ansprüchen 1 bis 3, bei dem der Schritt des Prägens eine Reduzierung der Dicke der Linse beim Schließen der Form umfasst, um eine Linse mit einer Dicke zwischen 0,5 und 0,6 mm zu prägen.

5. Verfahren gemäß Anspruch 1, bei dem auf den Schritt des Einspritzens hinfolgend, das Verfahren weiterhin den Schritt des Verschiebens des Injektors in den Nachdruckmodus umfasst, sodass das Formmaterial aufhört in die Kavität zu fließen.

6. Verfahren gemäß Anspruch 1, bei dem die Einsätze in einer festen Position innerhalb der jeweiligen Hülsen befestigt sind, sodass eine durch das Formmaterial auf die Einsätze aufgebrachte Kraft auf die Schließeinheit übertragen wird.

7. Verfahren gemäß Anspruch 1, bei dem der Schritt des Einspritzens, das Einspritzen vom Formmaterial bei einer Geschwindigkeit von zumindest 3 ips bei einem Einspritzdruck von zumindest in etwa 6gMPa (10.000 psi) umfasst.

8. Verfahren gemäß einem der vorangegangen Ansprüche, bei dem das Formmaterial Polycarbonat ist und eine Viskosität von weniger als 400 Pa für Schergeschwindigkeiten unter 1.000 /s aufweist.

9. Verfahren gemäß einem der vorangegangen Ansprüche, bei dem die Linse eine von einem Planträger für einen Beschichtungstransferprozess und einer bifokalen Linse für eine laminierte photochrome optische Anordnung ist.

10. Verfahren zur Herstellung laminierter photochromer Linsen umfassend: Spritzgießen gemäß einem der vorangegangen Ansprüche einer ultradünnen Frontlinse (20) mit einer Dicke von weniger als 0,8 mm; Verfestigen einer flüssigen photochromen Lösung in situ auf einer Einstärken (SV) Trägerlinse (30) ohne Druck um eine photochrome Schicht (30p) direkt auf einer SV Trägerlinsenoberfläche ohne eine intermediäre adhäsive Schicht zu bilden; Aufbringen von zumindest zwei Verbindungen (50a, 50b) zwischen der photochromen Schicht und der ultradünnen Frontlinse, wobei die Verbindung ausgewählt werden aus der Gruppe bestehend aus einer Schutzschicht, einer Grundschicht, einer acrylbasierten Schicht, einer Polyuretanlatexschicht, einer adhäsiven Schicht und deren Kombinationen; und Laminieren der ultradünnen Frontlinse auf die photochrome Schicht mit Kompressionsdruck, wobei die Form der ultradünnen Frontlinse bis zu 0,5 Basiskurven abweichen kann, um sich vollständig der Form der SV Trägerlinsenoberfläche anzupassen.

11. Verfahren gemäß Anspruch 10, bei dem der Schritt des Spritzgießens das Prägen einer ultradünnen Linse mit einer Dicke zwischen 0,8 mm und 0,3 mm, bevorzugt zwischen ungefähr 0,7 mm und in etwa 0,5 mm umfasst.

12. Verfahren gemäß Ansprüchen 10 oder 11, bei dem die ultradünne Frontlinse eine oben gerade bifokale Linse umfasst, mit einer Progression zwischen +1,00 und +3,00 Dioptrie.

13. Verfahren gemäß Ansprüchen 10 bis 12, bei dem der Schritt des Aufbringens von zumindest zwei Verbindungen umfasst erstens Beschichten einer Polyuretanenlatexgrundierung auf die photochrome Schicht der Trägerlinse; und zweitens Aufbringen eines optischen Adhäsivs zwischen der Grundierung und der ultradünnen Frontlinse.

14. Verfahren gemäß Ansprüchen 10 bis 13, bei dem der Schritt des Aufbringens von zumindest zwei Verbindungen umfasst erstens Aufbringen einer Schutzbeschichtung auf die photochrome Schicht der Trägerlinse; und zweitens Aufbringen eines optischen Adhäsivs zwischen die Schutzbeschichtung und die ultradünne Frontlinse.

15. Verfahren gemäß Ansprüchen 13 bis 14, bei dem der zweite Schritt des Aufbringens ein Aufbringen eines drucksensitiven adhäsiven Films umfasst.

16. Verfahren gemäß einem der vorangegangen Ansprüche, bei dem der Schritt des Laminierens ein Aufblasen einer Silikongummiblase umfasst, um Druck auf die ultradünne Frontlinse auszuüben.

17. Verfahren nach einem der vorangegangen Ansprüche, bei dem die SV Trägerlinse eine hintere Oberfläche aufweist, die dazu ausgelegt ist geschliffen zu werden, sodass die Verschreibungs- SV Trägerlinse individuell angepasst werden kann, wobei eine oben gerade bifokale Linse mit photochromen Eigenschaften, verliehen durch eine einheitlich dick laminierte photochromatisch aktive Schicht, bereitgestellt wird.

## Revendications

1. Procédé pour le moulage par injection de lentilles minces avec une opération de frappe, le procédé comprenant les étapes consistant à:
fermer les demi-moules avec une force de serrage F_{c} prédéterminée qui est inférieure à la force intégrée totale exercée sur les inserts de moule pendant l'injection ;
injecter un matériau à mouler dans la cavité pour forcer le moule à s'ouvrir, en réduisant ainsi la résistance à l'écoulement et en laissant le matériau atteindre des portions de la périphérie des inserts ; et
frapper une lentille ayant une section de moins de 1 mm d'épaisseur tandis que la force intégrée totale sur les inserts s'atténue.

2. Procédé selon la revendication 1, dans lequel la réduction de la résistance à l'écoulement comprend une des opérations de purger la cavité par le plan de séparation ouverte du moule ; d'augmenter la hauteur de la cavité de l'orifice de coulée aux portions éloignées de la périphérie des inserts ; et de combinaisons de purger et d'augmenter.

3. Procédé selon la revendication 2, dans lequel, au cours de l'étape d'injection, le matériau à mouler est en contact intime avec les inserts en une épaisseur supérieure à l'épaisseur de la lentille frappée finale.

4. Procédé selon les revendications 1 à 3, dans lequel ladite étape de frappe comprend la réduction de l'épaisseur de la lentille lors de la fermeture du moule, pour frapper une lentille ayant une épaisseur entre 0,5 et 0,6 mm.

5. Procédé selon la revendication 1, dans lequel, après ladite étape d'injection, le procédé comprend en outre l'étape consistant à faire passer l'injecteur à un mode de pression de tassement, de telle sorte que le matériau à mouler arrête de s'écouler dans la cavité.

6. Procédé selon la revendication 1, dans lequel les inserts sont maintenus en position fixe à l'intérieur de leurs manchons respectifs, de telle sorte que la force exercée sur les inserts par le matériau à mouler soit transférée à la crampe du moule.

7. Procédé selon la revendication 1, dans lequel ladite étape d'injection comprend l'injection du matériau à mouler à une vitesse d'au moins environ 3 ips à une pression d'injection d'au moins environ 69 MPa (10 000 psi).

8. Procédé selon l'une quelconque des revendications précédentes, dans lequel le matériau à mouler est un polycarbonate et une viscosité inférieure à 400 Pa pour des taux de cisaillement inférieurs à 1000/s.

9. Procédé selon l'une quelconque des revendications précédentes, dans lequel la lentille est une des lentilles consistant en une lentille d'un support plan pour un procédé de revêtement par transfert et une lentille bifocale pour un assemblage optique photochromique stratifié.

10. Procédé pour produire des lentilles photochromiques stratifiées, comprenant :
mouler par injection suivant l'une quelconque des revendications précédentes d'une lentille frontale ultra-mince (20) ayant une épaisseur inférieure à 0,8 mm ;
solidifier une solution photochromique liquide in situ sur une lentille de support unifocale (SV) (30) sans pression pour former une couche photochromique (30p) directement sur une surface de la lentille de support SV en l'absence de couche adhésive intermédiaire ;
appliquer au moins deux composés (50a, 50b) entre la couche photochromique et la lentille frontale ultra-mince, le composé étant choisi dans le groupe consistant en une couche protectrice, une couche d'apprêt, une couche à base acrylique, une couche de latex de polyuréthanne, une couche adhésive et leurs combinaisons ; et
stratifier ladite lentille frontale ultra-mince sur ladite couche photochromique avec une pression de compression, la forme de la lentille frontale ultra-mince pouvant ainsi être défléchie d'une distance allant jusqu'à 0,5 courbure de base pour épouser totalement la forme de la surface de la lentille de support SV.

11. Procédé selon la revendication 10, dans lequel ladite étape de moulage par injection comprend la frappe d'une lentille ultra-mince ayant une épaisseur de 0,8 mm à 0,3 mm, et de préférence d'environ 0,7 mm à environ 0,5 mm.

12. Procédé selon la revendication 10 ou 11, dans lequel la lentille frontale ultra-mince comprend une lentille bifocale à segment supérieur droit ayant un pouvoir d'addition de +1,00 à +3,00 dioptries.

13. Procédé selon les revendications 10 à 12, dans lequel ladite étape d'application d'au moins deux composés comprend :
tout d'abord l'application sous forme de revêtement d'un apprêt à base de latex de polyuréthanne sur la couche photochromique de la lentille de support ; et
deuxièmement, l'application d'un adhésif optique entre l'apprêt et la lentille frontale ultra-mince.

14. Procédé selon les revendications 10 à 13, dans lequel ladite étape d'application d'au moins deux composés comprend :
tout d'abord l'application d'un revêtement protecteur sur la couche photochromique de la lentille de support ; et
deuxièmement, l'application d'un adhésif optique entre le revêtement protecteur et la lentille frontale ultra-mince.

15. Procédé selon les revendications 13 et 14, dans lequel ladite seconde étape d'application comprend l'application d'un film d'adhésif sensible à la pression.

16. Procédé selon l'une quelconque des revendications précédentes, dans lequel ladite étape de stratification comprend le gonflement d'une vessie en caoutchouc silicone pour appliquer une pression sur la lentille frontale ultra-mince.

17. Procédé selon l'une quelconque des revendications précédentes, dans lequel la lentille de support SV a une surface postérieure qui est adaptée à être meulée de telle sorte que la prescription de la lentille de support SV puisse être adaptée, ce qui donne une lentille bifocale à segment supérieur droit ayant des propriétés photochromiques conférées par une couche photochromiquement active stratifiée d'épaisseur uniforme.
